# EUROPEAN PATENT APPLICATION

(11) **EP 0 545 592 A1**
(43) Date of publication of application: **09.06.1993**
(21) Application number: 92310622.3
(22) Date of filing: 20.11.1992
(51) Int. Cl.: C03B 33/09, C03B 33/095

(54) **Method of cutting a glass article**

(30) Priority: 02.12.1991 JP 341744/91
(71) Applicant: Toyo Glass Company Limited, Tokyo (JP)
(72) Inventor: Ogata, Haruhiko, Ayase-shi, Kanagawa (JP); Komiya, Hidetoshi, Ohta-ku, Tokyo (JP); Ohgaki, Katumi, Ohta-ku, Tokyo (JP)
(74) Representative: Dixon, Donald Cossar

(57) **Abstract**

A method of cutting a glass article comprises applying a conductive coating material, e.g. of colloidal carbon, in a straight or curved line, which can be an endless line (Fig. 5), on a surface of a glass article (1;11) to be cut; and passing a current at a potential of 500 to 10,000 volts and preferably a frequency of 100 KHz to 10 MHz through the line (2) of coating material by means of a pair of positive and negative electrodes (3,4) so as to generate heat in the coating material and thereby to cause the glass article (1;11) to break due to the resultant thermal stress at the line of said material. Preferably mechanical stress is applied to the glass article (1) simultaneously with the high potential. While the current is being passed, flames may be blown from a pair of burners through spacings between the conductive coating material and the electrodes so that the coating material is also heated by means of the flames (Fig. 3).

The article breaks easily even if its surface is not flat or the cutting line is curved.

## Description

This invention relates to a method of cutting a glass article along a planned cutting line by means of thermal stress.

A method of this type mentioned is disclosed, for example, in JP-A-1-167248. According to this conventional glass article cutting method, an electrical resistance wire is laid along a desired cutting line on a surface of a glass plate, and electric current is supplied to the wire while mechanical stress is applied to the glass plate in a direction perpendicular to the cutting line, whereafter water is dropped to cause water drops to adhere to an end face portion of the glass plate so as to effect cutting (breakage) of the glass plate due to the thermal stress.

However, according to this conventional glass cutting method, a Nichrome wire which is a ready-made wire stock is employed, and the wire is laid on a surface of the glass article and electrically heated. Accordingly, this conventional cutting method has the following disadvantages:
First, while there is no trouble when the planned cutting line is straight, it is difficult to cut along a curved line, particularly of a free configuration.

Further, the cross contactness between a surface of a glass article and the wire is low, and consequently, the thermal efficiency is low.

Furthermore, when there is a concave or convex portion on a face of the glass article, the wire is there spaced away from the face of the glass, and consequently, the glass cannot be cut at that portion.

Accordingly, the known cutting method cannot be readily applied to the cutting of a glass article having a complicated profile.

It is an object of the present invention to provide a glass article cutting method by which a glass article can be cut not only along a straight line but also along a curved line of a complicated profile.

It is another object to provide such a method by which, even if there is a concave or convex portion on a face of a glass article to be cut or the article has a complicated three-dimensional profile, the article can be cut comparatively readily.

According to the present invention, we provide a method of cutting a glass article, which comprises the steps of applying a conductive coating material (such as colloidal carbon or conductive glass paste) in a straight or curved line on a surface of a glass article to be cut, and passing a current at a high potential of 500 to 10,000 volts along the line of the conductive coating material by means of a pair of positive and negative electrodes so as to generate heat in the coating material and thereby to cause the glass article to break due to the resultant thermal stress at the line of said material.

When the high potential is applied from the electrodes across conductive coating material applied in a line on a surface of a glass article to be cut so that electric current flows through the conductive material, heat is generated along the line of the conductive coating material. Consequently, thermal stress is applied to the portion of the glass article along that line, and the article breaks along the line due to the thermal stress.

Since a conductive coating material which can be drawn freely on a surface of a glass article to be cut is employed as the conductive line, the article can be cut along a straight line or a curved line in any desired configuration. Further, since such conductive coating material is in close contact with a surface of the glass article, the article can be cut at high thermal efficiency. Furthermore, even if the article has a concave or convex portion on a face thereof or has a complicated three-dimensional profile, it can be cut readily without particular trouble.

If the conductive coating material is applied in an endless line, a portion of the glass article delineated by the endless line can thus be cut away from the remainder of the article.

Mechanical stress is preferably simultaneously applied to the glass article when the current is passed which causes the thermal stress; the time required to cut the glass article is thereby decreased and a clean cut face can be obtained.

Preferably, the positive and negative electrodes are spaced away from the conductive coating material, and during the high voltage application a flame is also blown from a pair of burners through the spacings between the conductive coating material and the positive and negative electrodes, so that the conductive coating material may be energized by means of the flame. Preferably, the surface of the glass article is moved while the conductive coating is thus energized; the thermal stress is thus made uniform and the cutting time is reduced.

Preferably, the high potential current passed through the conductive coating material is of a high frequency of 100 KHz to 10 MHz; this ensures a high degree of safety in the cutting operation.

The invention will be further explained by the following description taken in conjunction with the accompanying drawings in which like parts or elements are denoted by like reference characters, and wherein:
FIG. 1 is a schematic perspective view of a glass plate being cut along a curved line by means of the invention;
FIG. 2 is a schematic perspective view of a glass plate cut along a circular line;
FIG. 3 is a schematic side elevational view of a glass plate being cut with flames used to flow electric current therethrough;
FIG. 4 is a schematic perspective view of a glass plate being cut along a straight line; and
FIG. 5 is a schematic perspective view of a glass bottle being cut along a circular line.

The cutting method according to the present invention was applied to several glass articles along lines of various profiles, as described below.

### Example 1

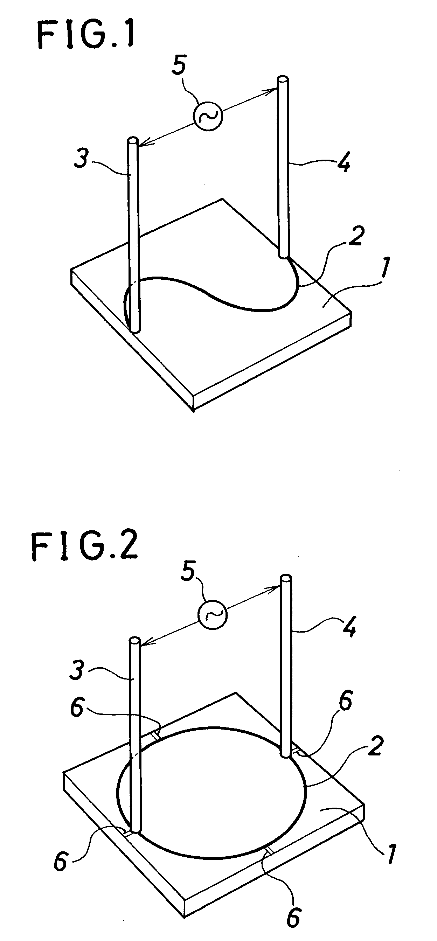

Referring first to FIG. 1 there is shown a glass plate being cut along a curved line in accordance with the present invention. Colloidal carbon was applied along a planned cutting line of a sine curve-like curved profile to a surface of a glass plate 1 to be cut, and the ends of a pair of positive and negative electrodes 3 and 4 were contacted with the opposite ends of the colloidal carbon line 2 and electric current of 1800 volts and high frequency was applied from a high frequency high voltage source 5 to an end of the positive and negative electrodes 3 and 4 so as to heat energize the colloidal carbon line 2. The thickness of the glass plate 1 was 15 mm, the resistance of the colloidal carbon was 85 KΩ, and the heating temperature of the glass plate 1 by the electric current flowing through the colloidal carbon line 2 was 100 to 500°C.

As a result, the glass plate 1 was cut along the curved line after about 12 seconds from starting of the application of the current.

### Example 2

Referring now to FIG. 2, colloidal carbon was applied along a circular planned cutting line 2 on a surface of a glass plate 1, and the ends of positive and negative electrodes 3 and 4 were contacted with a pair of diametrically opposite points of the circular line 2 and 1000 volts current at a high frequency was applied from the high frequency high voltage source 5 to heat the colloidal carbon line 2. The thickness of the glass plate 1 was 10 mm, and the resistance of the colloidal carbon was 10 KΩ.

As a result, the glass plate 1 was cut circularly after about 25 seconds from starting of application of the current. In order to facilitate cutting away of the portion to be cut circularly, for example four cuts 6 may be previously made from the circular planned cutting line to the end faces of the glass plate 1 using a diamond blade or like means.

### Example 3

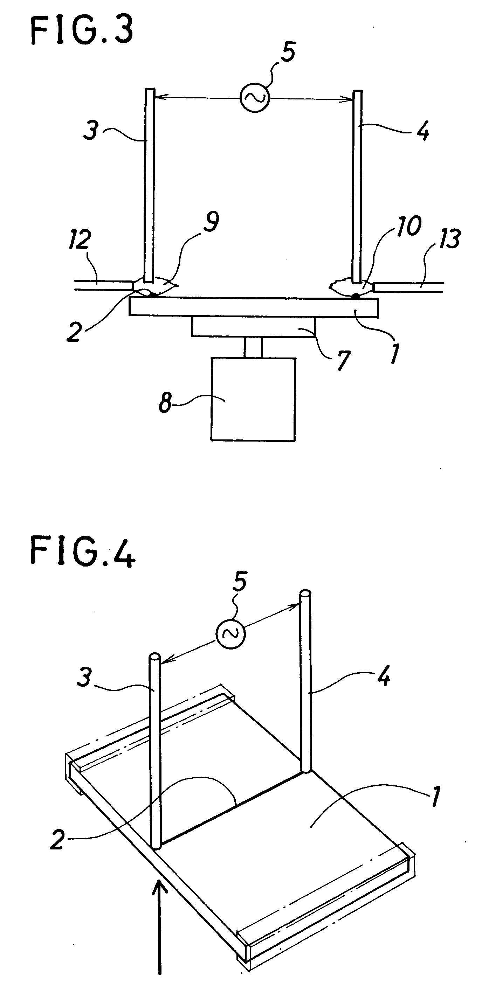

A circular colloidal carbon line 2 was drawn on a surface of a glass plate 1 similarly as in FIG. 2, and four cuts were made in advance similarly to the surface of the glass plate 1. The glass plate 1 was placed on a turntable 7 as shown in FIG. 3 and rotated by the turntable 7. Referring to FIG. 3, the ends of the positive and negative electrodes 3 and 4 between which the high frequency high potential source 5 was connected were spaced above the colloidal carbon line 2 by a predetermined small distance, and while the glass plate 1 was being rotated, flames 9 and 10 from a pair of energizing gas burners 12 and 13 were blown into the spaces between the circular colloidal carbon line 2 and the positive and negative electrodes 3 and 4, respectively, so that the circular colloidal carbon line 2 was heated (energized) by the flames 9 and 10. The thickness of the glass plate 1 was 15 mm, the resistance of the colloidal carbon was 30 KΩ, the potential applied was 1.5 KV, the flame was obtained by combustion of a mixture of town gas and air, and the speed of rotation of the turntable 7 was 10 rpm.

The glass plate 1 was cut circularly after about 18 seconds from starting of the current.

### Example 4

Referring to FIG. 4, a colloidal carbon line 2 was drawn in the form of a straight line at a mid portion of a surface of a glass plate 1, and the opposite ends of the plate 1 were held fixed. In this condition, mechanical stress was applied to the glass plate 1 in such a manner as to push up a central portion of the glass plate 1 from below while a high potential of 1.8 KV and high frequency high voltage source 5 was applied from the positive and negative electrodes 3 and 4 to the opposite ends of the colloidal carbon 2. The thickness of the glass plate 1 was 19 mm, and the resistance of the colloidal carbon was 50 KΩ.

The glass plate 1 was cut clean along the line 2 in a short period of time of about 2 seconds after starting of application of the current.

### Example 5

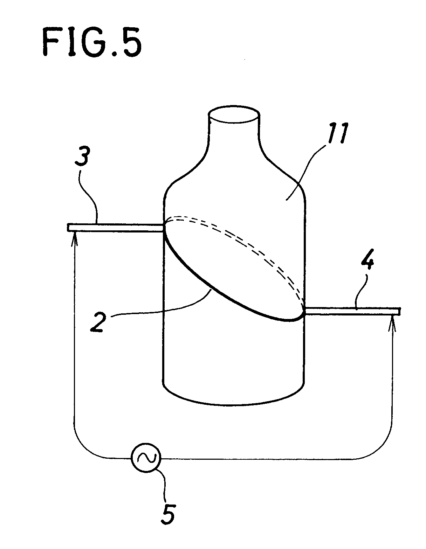

Referring to FIG. 5, a colloidal carbon line 2 was drawn on an outer cylindrical face of a glass bottle 11 in such a manner as to extend annularly, and the ends of positive and negative electrodes 3 and 4 were contacted with a pair of two diametrically opposite points of the annular colloidal carbon line 2, and a high potential of 1.0 KV was applied across the annular line 2. The thickness of the glass bottle 1 was 2 mm, and the resistance of the colloidal carbon was 25 KΩ. As a result, the glass bottle 11 was cut along the annular colloidal carbon line 2 in about 9 seconds after starting of application of the voltage.

While in the foregoing examples colloidal carbon is used as a conductive coating material, a conductive glass paste or a metal paste, e.g. of copper may alternatively he employed. Further, while the high frequency high voltage source 5 was employed in the examples in order to ensure safety, the potential to be applied to a line of a conductive coating material need not always be of a high frequency.

## Claims

1. A method of cutting a glass article, which comprises the steps of:
applying a conductive coating material in a straight or curved line on a surface of a glass article (1;11) to be cut; and
passing an electric current at a potential of 500 to 10,000 volts through the line (2) of conductive coating material by means of a pair of positive and negative electrodes (3,4) so as to generate heat in the coating material and thereby to cause the glass article (1;11) to break due to the resultant thermal stress at the line of said material.

2. A method as claimed in claim 1, wherein the conductive coating material is applied in an endless line.

3. A method as claimed in Claim 1 or 2, further comprising the step of applying mechanical stress to the glass article (1) simultaneously when the current is passed through the line (2).

4. A method as claimed in Claim 1, 2 or 3, wherein said positive and negative electrodes (3,4) are spaced away from the conductive coating material, and whilst the current is being passed flame (9,10) is blown from a pair of burners (12,13) to the spacings between the conductive coating material and said positive and negative electrodes (3,4) so that the conductive coating material is heated by means of the flames (9,10).

5. A method as claimed in Claim 4, wherein the surface of the glass article (1) is moved while the conductive coating is heated by the flames (9,10).

6. A method as claimed in any preceding claim, wherein the electrical potential applied to the conductive coating material has a high frequency of 100 KHz to 10 MHz.

7. A method as claimed in any preceding claim, wherein said conductive coating material is of colloidal carbon or a conductive glass paste.
